# EUROPÄISCHE PATENTSCHRIFT

(11) **EP 1 214 851 B1**
(45) Veröffentlichungstag und Bekanntmachung des Hinweises auf die Patenterteilung: **10.12.2008**
(21) Anmeldenummer: 00963983.2
(22) Anmeldetag: 13.09.2000
(51) Int. Cl.: H04Q 3/62, H04Q 3/60, H04Q 11/04

(54) **Verfahren und Anordnung zum Auf- und Abbau von Kommunikationsverbindungen über Kommunikationseinrichtungen mehrerer Typen unter Steuerung durch eine zentrale Steuerungseinrichtung**
Method and arrangement for establishing and releasing communication connections among various types of communication devices under control by a central control device
Procédé et dispositif pour établir et couper des liaisons de communication parmi plusieurs types de dispositifs de communication sous contrôle d'un dispositif centrale de commande

(30) Priorität: 21.09.1999 DE 19945153
(43) Veröffentlichungstag der Anmeldung: 19.06.2002
(73) Patentinhaber: Siemens Enterprise Communications GmbH & Co. KG, 81379 München (DE)
(72) Erfinder: WINKLER, Steffi, Lissi, 82131 Gauting (DE); EMMERINK, Antonius, 81671 München (DE); KLEIN, Egon, Franz, 82110 Germering (DE); WINDECKER, Rainer, 81739 München (DE); STEFFAN, Andreas, 81477 München (DE); WAHLER, Josef, 82024 Taufkirchen (DE)
(74) Vertreter: Maier, Daniel Oliver
(86) Internationale Anmeldenummer: PCT/DE2000/003176
(87) Internationale Veröffentlichungsnummer: WO 2001/022768

(56) Entgegenhaltungen:
- EP-A- 0 920 234
- WO-A-99/66759

## Beschreibung

Die Erfindung bezieht sich auf ein Verfahren und eine Anordnung zum Auf- und Abbau, bzw. Unterhalt von Kommunikationsverbindungen, insbesondere im Rahmen einer privaten Nebenstellenanlage und der daran angeschlossenen Endgeräte.

Wegen des steigenden Kommunikationsaufkommens bedingt durch zunehmende Anzahl der Kommunikationsteilnehmer, sowie durch steigende Anforderungen an die Menge der zu übertragenden Daten, werden an Vermittlungseinrichtungen, insbesondere an privaten Nebenstellenanlagen immer höhere Anforderungen hinsichtlich der Datenübertragungskapazität je Kommunikationsverbindung und der Anzahl der miteinander verbindbaren Kommunikationsendgeräte gestellt.

Aktuelle Einrichtungen basieren beispielsweise auf dem TDM-Verfahren (Time Division Multiplexing), bei dem Kommunikationsdaten unterschiedlicher Verbindungen in jeweils definierten Zeitschlitzen übertragen werden. Eine Verbindung unterschiedlicher Kommunikationspartner wird durch ein Koppelfeld hergestellt, welches gemäß einer Steuerinformation eingehende Zeitschlitze auf einer eingehenden Verbindung ausgehende Zeitschlitze einer ausgehenden Verbindung zuordnet. Solche Koppelfelder sind in der Regel fest dimensioniert und können lediglich eine definierte Anzahl von Verbindungen herstellen, was oft eine bedarfsgerechte Anpassung von Vermittlungsanlagen erschwert. Ferner weisen die Zeitschlitze eine begrenzte Aufnahmefähigkeit für Daten auf. Beispielsweise kann ein Koppelfeld 4096 Verbindungen herstellen, während innerhalb eines Zeitschlitzes maximal 64 KBit an Daten übertragen werden können.

Einer steigenden Teilnehmeranzahl kann also lediglich in einer Stückelung von 4096 Verbindungen Rechnung getragen werden. Eine Nutzung dieser unterschiedlichen Ausbaustufen erfordert jedoch zusätzlichen Entwicklungsaufwand zur Anpassung der Vermittlungseinrichtung an die höhere Teilnehmerzahl. Eine flexible Steigerung der Übertragungsleistung je Verbindung ist ebenfalls nicht ohne Weiteres möglich, sondern kann bestenfalls durch den Aufbau von zwei oder mehr Kommunikationsverbindungen, also in Form einer 64 KBit-Stückelung erfolgen. In der Praxis hat sich diese Art der Bandbreitenvervielfachung zur Übertragung über ISDN (Integrated Services Digital Network) jedoch nicht durchgesetzt und dafür sind kaum Endgeräte verfügbar.

Obwohl solche bestehenden Kommunikationssysteme Nachteile aufweisen, die im Zuge von Neuentwicklungen bei künftigen Kommunikationseinrichtungen abgestellt werden sollten, ist zumindest während einer Übergangsphase die nahtlose Integration von bestehenden und neuen Kommunikationseinrichtungen zu einer homogenen Kommunikationsinfrastruktur zwingend erforderlich.

Zum einen, weil die bereits getätigten Investitionen beim Endanwender und Kommunikationsnetzbetreiber geschützt werden müssen. Zum anderen, weil sie technisch notwendig ist, um einzelne Kommunikationsinseln zu vermeiden, die für die unterschiedlichen Systeme entstehen würden.

Eine solche Integration von Kommunikationssystemen unterschiedlicher Natur ist z.B. aus EP 0 920 234 A2 oder aus WO 99/66759 A2 (Stand der Technik nach Art. 54(3) EPÜ) bekannt.

Die der Erfindung zugrunde liegende Aufgabe besteht darin, ein Verfahren und eine Anordnung zur Bereitstellung, bzw. zum Unterhalt einer Kommunikationsverbindung anzugeben, welche ein hohes Maß an Flexibilität hinsichtlich der Anpassung an die Anzahl bereitzustellender Kommunikationsverbindungen, an das Kommunikationsaufkommen je Verbindung, sowie deren räumlicher Ausdehnung gewährleisten und sich problemlos in eine bestehende Kommunikationslandschaft einfügen. Diese Aufgabe wird für das Verfahren gemäß den Merkmalen des Patentanspruches 1 und für die Anordnung gemäß den Merkmalen des Patentanspruches 9 gelöst. Weiterbildungen der Erfindung ergeben sich aus den abhängigen Ansprüchen.

Vorteilhaft sind gemäß dem beschriebenen Verfahren mehrere Kommunikationseinrichtungen unterschiedlichen Typs im Verbund betreibbar, wobei bei einem Typ eine Steuerungsfunktion in einem Steuerungsnetz realisiert wird und die Verbindungsfunktion über ein Transportnetz angeboten wird. Dies geschieht vorteilhaft unter Zuhilfenahme einer Verbindungseinrichtung, die auf einem abhängig vom Anwendungstyp geeigneten und verfügbaren Transportnetz beliebiger Art angesiedelt sein kann. Vorteilhaft wird zu dessen Ansteuerung eine Steuerung einer bekannten Kommunikationseinrichtung eingesetzt, die auf das Steuerungsnetz zugreift.

Auf diese Weise wird erreicht, daß einem steigenden Kommunikationsaufkommen durch ein geeignet dimensioniertes Transportnetz mit ausreichender Übertragungskapazität Rechnung getragen werden kann, während die Steuerung, bspw. eines Steuerungsnetzes nicht erweitert werden muß und in ihrer vorliegenden Form weitestgehend bestehen bleiben kann. Außerdem wird durch das Verfahren sichergestellt, daß räumlich weit verteilte dezentrale Kommunikationsanordnungen aus einem Verbund von Kommunikationseinrichtungen verschiedener Typen betreibbar sind, worin besonders bei Kommunikationseinrichtungen des ersten Typs vorteilhaft lediglich die Steuerungsinformationen zu einer zentralen Steuerungseinrichtung zu führen sind, während die Kommunikationsverbindungen über ein separates Transportnetz von geeigneter Topologie bereitgestellt werden. Durch die gemeinsame Verwendung der Steuerung für Kommunikationseinrichtungen unterschiedlichen Typs wird eine homogene Kommunikationslandschaft geschaffen, die eine einfache Integration verschiedenster Kommunikationseinrichtungen ermöglicht.

Beim Einsatz einer zentralen Steuereinrichtung können vorteilhaft vorhandene Datenbestände und Steuerverfahren einer zentralen Vermittlungseinrichtung weiter genutzt werden, um dezentrale Vermittlungseinrichtungen des Transportnetzes im Zuge der Bereitstellung einer Kommunikationsverbindung zu steuern. Auf diese Weise wird eine reibungslose Integration von bestehenden Lösungen mit Verbindungsfunktion über ein Koppelfeld und Migration zu neuen Lösungen gewährleistet und die Vorteile einer zentralen Datenadministration, sowie Störungserkennung und -Behebung bleiben bei höherer Flexibilität weiter erhalten.

Besonders vorteilhaft werden im Transportnetz Verbindungen über dezentrale Einrichtungen aufgebaut. Auf diese Weise können vorteilhaft Transportverbindungen innerhalb einer dezentralen Einrichtung bereitgestellt werden, insbesondere zwischen mehreren dezentralen Einrichtungen, deren Datenströme so die zentrale Steuerung nicht belasten. Es wird ein hohes Maß an Redundanz erzielt und für das Transportnetz sind Vermittlungseinrichtungen jeweils nach dem aktuellsten Stand der Technik einsetzbar, wie derzeit beispielsweise ATM-, Ethernet- oder IP-Vermittlungen.

Besonders vorteilhaft steuert bei einer Ausgestaltung des beschriebenen Verfahrens eine zentrale Einrichtung ebenfalls die dezentralen Vermittlungseinrichtungen, da auf diese Weise mehrere dezentrale Einrichtungen miteinander verbunden werden können, die sich zusammen wie eine einzige Vermittlungseinrichtung verhalten. Auf diese Weise können verbindungsbezogene Leistungsmerkmale, die zentral implementiert sind, für Kommunikationsverbindungen über das Transportnetz realisiert werden, ohne daß hierfür ein zusätzlicher Entwicklungsaufwand auf der Seite des Transportnetzes betrieben werden muß. Ebenso können Anpassungen der bereitgestellten Leistungsmerkmale, um sie netzweit verfügbar zu machen auf der Steuerungsseite unterbleiben. Vorteilhaft lassen sich so auch solche Verfahren auf verteilten Vermittlungseinrichtungen netzweit nutzen, die sonst nur auf einer einzigen lokalen und nicht auf mehreren Vermittlungseinrichtungen zur Verfügung stehen. Günstigerweise sind so auch Applikationen und Schnittstellen für Applikationen, die bisher nur auf Einzelanlagen zugreifen konnten, für die dezentralen Vermittlungseinrichtungen nutzbar. In einem Systemverbund aus Kommunikationseinrichtungen unterschiedlichen Typs wird so jeweils nur eine einzige Steuerung benötigt.

Vorteilhaft werden bei einer Weiterbildung des beschriebenen Verfahrens Kommunikationsdatentypen für unterschiedliche Typen von Kommunikationseinrichtungen dezentral umgesetzt, weil so ein hohes Maß an Flexibilität bzgl. der Topologie der Netze erreichbar ist, die von den unterschiedlichen Kommunikationseinrichtungen bedient werden, und beliebig viele Typen von Kommunikationseinrichtungen miteinander betreibbar sind. Vorteilhaft ist so ebenfalls die Umsetzkapazität einer Umsetzeinrichtung an die Vermittlungskapazität einer dezentralen Einrichtung anpaßbar.

Besonders vorteilhaft werden bei einer Variante des beschriebenen Verfahrens über das Transportnetz Endgeräte verbunden, welche mittels einer Zeitschlitzmultiplexverbindung erreichbar sind, wobei in der Steuerung aus einer herkömmlichen zeitschlitzbezogenen Verbindungsinformation neue geeignete Verbindungsinformationen generiert werden, um die Bereitstellung einer Kommunikationsverbindung über das Transportnetz zu steuern. Auf diese Weise lassen sich bereits vorhandene Verfahren zur Steuerung von TDM-Koppelfeldern einsetzen, um Verbindungen nach dieser Variante des Verfahrens aufzubauen und damit ohne großen Aufwand TDM-basierende Vermittlungssysteme mit derartigen Kommunikationseinrichtungen kombinieren.

Ohne Einschränkung können im Transportnetz aber auch andere dynamisch aufgebaute Verbindungen, wie beispielsweise ATM-Verbindungen oder IP-Verbindungen eingerichtet werden. Diese Verbindungen erscheinen dabei der Steuerung vorteilhaft ähnlich wie herkömmliche TDM-Verbindungen und werden auch wie solche verarbeitet. Im speziellem werden dafür auch herkömmliche zeitschlitzbezogene Verbindungsinformationen generiert, die dann wiederum in neue und an das Transportnetz angepaßte Verbindungsinformationen umgeformt werden. Es ist also eine besonders einfache Integration bestehender und neuer Kommunikationstechnologien möglich, weil sich bereits vorhandene Verfahren zur Steuerung von TDM-Verbindungen einsetzen lassen, um Verbindungen über Kommunikationseinrichtungen unterschiedlichster Art aufzubauen.

Vorteilhaft wird dadurch ebenfalls der technische Realisierungsaufwand für diese Variante reduziert, die Integration von einem herkömmlichen Verfahren und Migration zu einem leistungsstarken Verfahren erleichtert, weil bspw. lediglich eine Anpassung dieser Steuerinformation an die Bedürfnisse eines Transportnetzes vorgenommen werden muß.

Besonders vorteilhaft werden bei einer Weiterbildung des beschriebenen Verfahrens Transportdaten nach einem asynchronen Transfermodus übertragen, weil ATM-Netze technisch ausgereift sind und Grundlage für höhere Transportkapazitäten und deren flexiblere Verteilung bieten. Außerdem sind ATM-Netze besonders für die zeitkritische Übertragung hoher Datenraten über dezentrale Vermittlungseinrichtungen geeignet, weil sie die für Sprache und Bewegtbilder erforderlichen Qualitätsmerkmale garantieren können (quality of service). Deshalb sind sie auch optimal an die Erfordernisse unterschiedlicher Typen von Kommunikationseinrichtungen anpaßbar.

Besonders vorteilhaft werden bei einer Weiterbildung des beschriebenen Verfahrens Leistungsmerkmale über die zentrale Einrichtung zur Steuerung bereitgestellt, weil auf diese Weise jedes beliebige Transportnetz und verschiedenste Typen von gesteuerten Kommunikationseinrichtungen einer vorhandenen Leistungsmerkmalsteuerung zugeführt werden können. Im übrigen kann auf diese Weise vorteilhaft auf bereits vorhandene Verfahren zur Bereitstellung von Leistungsmerkmalen zurückgegriffen werden und es muß nicht für jede gesteuerte Einrichtung eine unabhängige Anpassung der Leistungsmerkmalsteuerung durchgeführt werden.

Besonders vorteilhaft ist eine Kombination aus einer Anordnung zum Auf- und/oder Abbau, bzw. Unterhalt einer Kommunikationsverbindung, welche ein separates Steuerungsnetz insbesondere zur Übertragung von Signalisierungsinformationen und ein separates Transportnetz aufweist, wobei das Transportnetz über geeignete Mittel durch das Steuerungsnetz gesteuert wird. Als Kommunikationseinrichtung eines ersten Typs wird sie mit einer Kommünikationseinrichtung eines zweiten Typs von herkömmlicher Bauart kombiniert, bei der Kommunikationsverbindungen über ein Koppelfeld erzeugt werden. Vorteilhaft lassen sich dabei die Steuerungsbefehle, die für das Koppelfeld erstellt werden, auch für die leistungsfähige Kommunikationseinrichtung ersten Typs nutzen, ohne das ein übermäßiger Entwicklungsaufwand für deren Anpassung nötig ist.

Vorteilhaft lassen sich so Typen von Kommunikationseinrichtungen auf Basis von Netzen unterschiedlichster Topologie in eine TDM-basierte Kommunikationseinrichtung integrieren, wobei die Ausprägung einer Steuerungs- und Transportnetztopologie auch bedeuten kann, daß diese lediglich in logischer Strukturform für die Informationswege vorliegt, wohingegen die Daten über das selbe physikalische Netz übertragen werden.

Diese Kombination von erstem und zweitem Typ gibt eine Minimalkonfiguration einer Integrationslösung an.

Vorteilhaft weist die beschriebene Anordnung im Steuerungsnetz eine zentrale Einrichtung zur Steuerung auf, weil auf diese Weise die Teilnehmeradministration und Verbindungssteuerung und die damit verbundene Datenhaltung, Pflege und Sicherung, die Problemerkennung und -Behebung, sowie die Versorgung mit neuen Softwareausgabeständen zentral erfolgen kann.

Günstigerweise besitzt das Transportnetz eine dezentrale Einrichtung zum Anschluß eines Kommunikationsendgerätes, und eine in deren Bereich vorhandene dezentrale Vermittlungseinrichtung zur Bereitstellung einer Kommunikationsverbindung im Transportnetz. Auf diese Weise sind großflächige Bereiche über eine einzige private Nebenstellenanlage mit Kommunikationsverbindungen versorgbar, unter Maßgabe, daß der Verkabelungsaufwand minimal gehalten werden kann, weil lediglich das Steuerungsnetz zu einer Zentrale geführt werden muß, während sich für die Verbindung der dezentralen Vermittlungseinrichtungen durch das Transportnetz die geeignetste Topologie auch im Rahmen bereits verlegter, bzw. öffentlicher Netze wählen läßt.

Günstigerweise steht bei einer Weiterbildung der beschriebenen Anordnung die zentrale Steuereinrichtung mit einer Einrichtung zur Bereitstellung von Leistungsmerkmalen in Wirkverbindung, die auch ein integraler Bestandteil der Steuerungseinrichtung sein kann, weil auf diese Weise eine zentrale Bereitstellung von verbindungsbezogenen und anderen Leistungsmerkmalen mit minimalem Installations- und Implementierungsaufwand für eine homogene Kommunikationsinfrastruktur aus verschiedensten Typen von Kommunikationseinrichtungen erfolgen kann. Neben Leistungsmerkmalen kann diese Einrichtung zur Bereitstellung von Leistungsmerkmalen auch weiterführende Applikationen und/oder eine Schnittstelle zu Applikationen zur Verfügung stellen, die über Kommunikationsleistungsmerkmale hinausgehen. Vorteilhaft sind so externe Server, beispielsweise für Call Center Lösungen, CTI (Computer Telephonie Integration), über standardisierte Schnittstellen zentral ankoppelbar und im Netzverbund nutzbar.

Besonders vorteilhaft läßt sich eine private Nebenstellenanlage gemäß einer Weiterbildung der beschriebenen Anordnung aufbauen, die mindestens eine dezentrale Vermittlungseinrichtungen mit einer zentralen Steuereinrichtung kombiniert, weil auf diese Weise eine verteilte Nebenstellenanlage in Kombination mit einer herkömmlichen Kommunikationseinrichtung in Form einer Minimalkonfiguration mit einer einzigen gemeinsamen Steuerung zur Verfügung gestellt wird, welche modular beliebig erweiterbar ist.

Besonders vorteilhaft ist im Bereich mindestens einer dezentralen Einrichtung eine Notsteuerungseinrichtung angeordnet, die einen Notbetrieb zwischen Kommunikationsendgeräten ermöglicht, die an dieser dezentralen Einrichtung angeschlossen sind, falls die zentrale Steuerungseinrichtung ausfällt, oder das Steuerungsnetz unterbrochen ist. Damit wird eine sehr hohe Verfügbarkeit mit einer Einzelanlage erreicht, die der Verfügbarkeit von vernetzten Anlagen entspricht.

Im folgenden werden Ausführungsbeispiele der Erfindung anhand von Figuren weiter erläutert.
- Figur 1: zeigt eine herkömmliche Kommunikationsanordnung eines zweiten Typs,
- Figur 2: zeigt ein Beispiel einer Kommunikationsanordnung eines ersten Typs,
- Figur 3: zeigt ein Beispiel einer integrierten Kommunikationsanordnung.

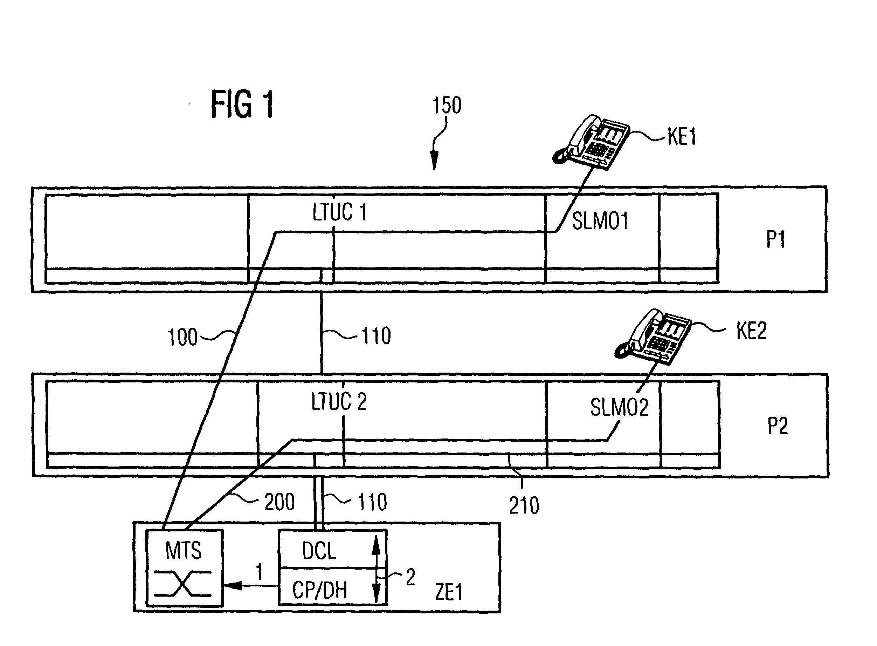

Figur 1 zeigt ein Beispiel einer bekannten Nebenstellenanlage 150 eines zweiten Typs mit zwei peripheren Einrichtungen P1 und P2, an welche jeweils ein digital oder analog arbeitendes Kommunikationsendgerät KE1 und KE2 angeschlossen ist. Diese peripheren Einrichtungen P1 und P2 sind im gleichen räumlichen Bereich, wie die zentrale Einrichtung ZE1 untergebracht. Beispielsweise befinden sie sich im selben Raum oder im selben Kabinett mit ihr. Die Endgeräte belegen definierte Zeitschlitze eines PCM-Datenstromes (Pulse Code Modulation) mit Kommunikationsdaten. Die digitalen oder analogen Kommunikationsendgeräte KE1 und KE2 sind jeweils an Anschlußbaugruppen SLMO1 und SLMO2 angeschlossen, welche dem PCM-Datenstrom digitale Daten, die für die jeweiligen Endgeräte bestimmt sind, bzw. von den jeweiligen Endgeräten ausgehen, über per Signalisierung festgelegte Zeitschlitze zuführen, bzw. entnehmen. Diese PCM-Datenströme sind in Figur 1 mit 100 bzw. 200 bezeichnet. Weiterhin sind Signalisierungsverbindungen dargestellt, welche mit 110 bzw. 210 dargestellt sind. Es ist zu beachten, daß es sich hierbei lediglich um eine logische Darstellung und nicht um eine physikalische Darstellung handelt. In Wirklichkeit werden jedoch die Transportdaten und die Signalisierungdaten im gleichen Verbindungskabel übertragen.

Weiterhin sind hier periphere Einrichtungen P1 und P2, sowie Versorgungsbaugruppen LTUC1 und LTUC2 dargestellt, welche den Datenverkehr zu den Anschlußbaugruppen der jeweiligen dezentralen Einrichtungen regeln. Der peripheren Einrichtung P1 werden Signalisierungsdaten über die Leitung 110 und der peripheren Einrichtung P2 über die Signalisierungsleitung 210 zugeführt.

Wie hier deutlich erkennbar ist, werden bei dieser Anordnung sowohl die zu transportierenden Informationen, als auch die Signalisierungsinformationen einer zentralen Einrichtung ZE1 zugeführt. Hierbei werden von einer Meldungseinrichtung DCL Meldungen 2 gesammelt und verteilt, die zwischen der zentralen Einrichtung ZE1 und den peripheren Einrichtungen P1, P2 ausgetauscht werden. Das Callprozessing CP steuert den Auf-und Abbau von Verbindungen und bedient sich dazu unter anderem gerätespezifischer Schnittstellenfunktionen DH, die beispielsweise in Form von Programmodulen realisiert sind. Dabei werden Einstellbefehle 1 für das Koppelfeld MTS erzeugt. Diese Einstellbefehle geben im wesentlichen an, welcher Eingang des Koppelfeldes mit welchem Ausgang zu verbinden ist, um eine Kommunikationsverbindung bereitzustellen. Steuerungs- und Verbindungsfunktion werden hier also von einer einzigen räumlich integrierten Funktionseinheit des Kommunikationsnetzes wahrgenommen. Dabei ist es im Zusammenhang mit der Ausführung des Verfahrens unerheblich, ob CP und DH Bestandteil der Steuerungssoftware sind, und ob sie als einzelne Module oder integriert vorliegen.

Probleme treten bei derartigen Konfigurationen auf, weil sämtliche zu transportierenden Daten der zentralen Einrichtung ZE1 zugeführt werden müssen. Dies ist selbst dann der Fall, wenn beispielsweise zwei Kommunikationsendgeräte miteinander kommunizieren sollen, die an der selben peripheren Einrichtung P1 angeschlossen sind. Der zu betreibende Verkabelungsaufwand bei derartigen Einrichtungen steigt mit der Entfernung der Endgeräte von der zentralen Einrichtung ZE1 an, so daß diese Art der Anordnung die flächenmäßige Ausdehnung einer Nebenstellenanlage einschränkt, bzw. bei der Abdeckung größerer Bereiche die Installation wesentlich verteuert.
Eine Alternative zur flächenmäßigen Ausdehnung einer einzelnen Einrichtung 150 wäre die Vernetzung mehrerer Einrichtungen 150, bei der jedoch die Vorteile einer Einzelanlage verloren gingen. Erschwerend ist es bei der Vernetzung mehrerer solcher Einrichtungen 150 erforderlich jeweils zusätzliche Trunkbaugruppen mit zusätzlichen Verbindungskabeln vorzusehen und zu installieren.

Probleme treten in derartigen Einrichtungen ebenfalls bei der modularen Erweiterbarkeit sowohl in der Zahl der Verbindungen, als auch in der Menge der zu übertragenden Daten auf. Das Koppelfeld MTS kann beispielsweise nur als gesamtes bereitgestellt werden. D.h. im Extremfall muß für eine zusätzliche Verbindung ein neues Koppelfeld mit beispielsweise 4096 Anschlüssen gekauft und installiert werden. Die Übertragungsrate wird in derartigen Systemen beispielsweise durch die Möglichkeit limitiert, daß per Zeitschlitz nur maximal 64 KBit oder eine andere administrativ festgelegte oder technisch bedingte Datenmenge übertragen werden kann, welche durch den ISDN-Standard vorgegeben wird. Diese Art der Ausgestaltung läßt es auch nicht zu, daß je individueller Kommunikationsverbindung unterschiedliche Datenraten möglich sind.

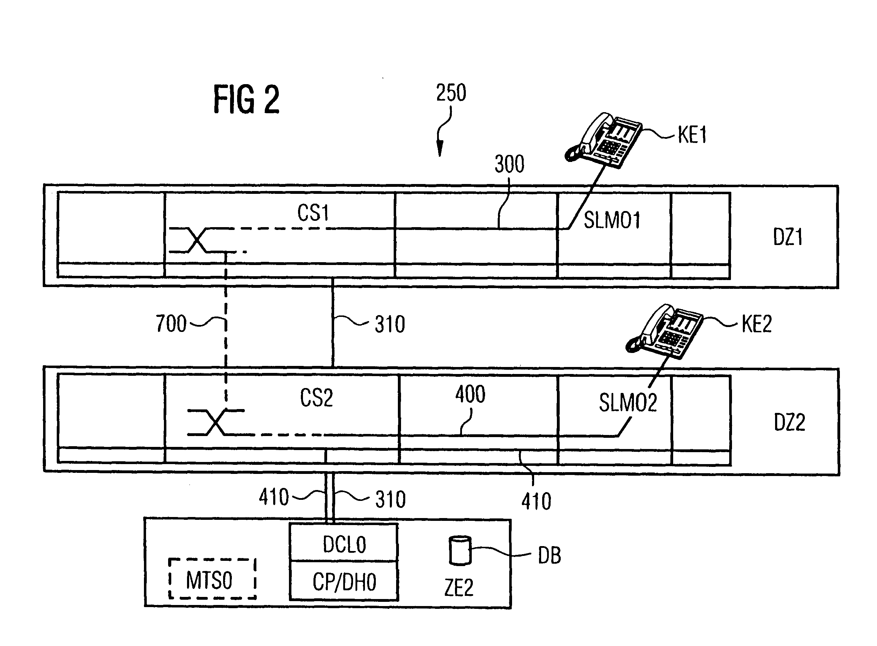

Figur 2 zeigt ein Beispiel einer leistungsfähigen Anordnung zum Aufbau von Kommunikationsverbindungen. Beispielsweise veranschaulicht diese Anordnung den Aufbau einer privaten Nebenstellenanlage 250 eines ersten Typs.

Mit gleichlautenden Bezugszeichen sind in der Figur 2 gleiche Bestandteile der Einrichtung wie in Figur 1 bezeichnet. Beim Betrachten der Figur 2 fällt unmittelbar auf, daß hier ein separates Transportnetz 700 und ein separates Steuerungsnetz 310/410 vorhanden ist. Dieser Aufbau einer Vermittlungsanlage hat den Vorteil, daß für das Transportnetz bereits vorhanden Netze, wie öffentliche oder private Netze genutzt werden können. Lediglich das Steuerungsnetz muß hier zur zentralen Einrichtung ZE2 geführt werden.

Die digitalen oder analogen Kommunikationsendgeräte KE1 und KE2 sind hier so dargestellt, daß sie jeweils an Anschlußbaugruppen SLMO1 und SLMO2 angeschlossen sind. Ohne Beschränkung der Erfindung sind jedoch in einer solchen Anordnung 250 auch Endgeräte denkbar und integrierbar, welche direkt, unter Umgehung, bzw. ohne SLMO an das Transportnetz 700 anschließbar sind. Es sind also auch ATM-Endgeräte oder IP-basierende (Internet Protokoll) Endgeräte anschließbar.

Wie ferner erkannt werden kann, weisen die dezentralen Einrichtungen DZ1 und DZ2 jeweils dezentrale Vermittlungseinrichtungen CS1 und CS2 auf, die beispielsweise in Form von ATM-Zugangseinrichtungen ausgeführt sein können. Ebenso veranschaulicht die Darstellung, daß das Koppelfeld MTSO nicht mehr für Verbindungsaufgaben eingesetzt wird. Statt dessen übernimmt das Transportnetz die Verbindungsaufgaben.

Über die Steuerungsleitungen 410 und 310 wird bei dieser Anordnung hierzu lediglich für die jeweiligen dezentralen Vermittlungseinrichtungen CS1 und CS2 je mindestens eine Steuerungsinformation zum Aufbau der Kommunikationsverbindung bereitgestellt, die aus einer zeitschlitzbezogenen Steuerungsinformation abgeleitet wird. Ferner ist der Figur zu entnehmen, daß auf einer Datenstrecke 300 bzw. 400 eine Umwandlung von PCM-Daten in ATM-Zellendaten durchgeführt wird.

Dazu kann entweder eine separate Umsetzeinrichtung im Datenfluß der Verbindungen 300, 400 vorgesehen sein, oder diese Funktion kann in der dezentralen Vermittlungseinrichtung CS1, CS2 integriert sein. Falls diese Einrichtung als programmierbarer Rechner ausgeführt ist, besteht die Möglichkeit die Umsetzfunktion als Programm zu implementieren, um damit die Vermittlungseinrichtungen zu steuern.

Hierbei ist zu vermerken, daß die Verwendung eines ATM-Netzes als Transportnetz hier lediglich als Ausführungsbeispiel dient. Dafür kommen ebenfalls Ethernet-Netze, andere IP-Verbindungen oder sogar TDM-Verbindungen in Betracht. Die Auswahl ist abhängig vom beabsichtigten Einsatzzweck und erstreckt sich auf die gesamte Palette an verfügbaren Netzen sowohl im schmalbandigen, als auch im breitbandigen Bereich.

Weil die Kommunikationsverbindungen zur zentralen Einrichtung ZE2 in Figur 2 entfallen, müssen bei diesem ersten Typ keine Gesprächsgebühren für etwaige Verbindungen von DZ1 und DZ2 zur zentralen Einrichtung ZE2 über öffentliche Leitungen, beispielsweise Standleitungen, entrichtet werden, wie das bei einer abgesetzten peripheren Einrichtung 150 aus Figur 1 bei Kommunikation von DZ1 zu DZ2 der Fall ist.

Bevorzugt wird auf den dezentralen Vermittlungseinrichtungen CS1 und CS2 ein transportnetzabhängiges Callprozessing durchgeführt, welches jedoch im wesentlichen auf Basic Call Funktionalität beschränkt ist. Leistungsmerkmale werden dabei durch die zentrale Steuerung ZE2 realisiert und bereitgestellt. Verbindungen zwischen den unterschiedlichen dezentralen Einrichtungen werden durch die zentrale Einrichtung ZE2 über Signalisierung gesteuert. Derartige Anordnungen sind sowohl schmalband- als auch breitbandfähig. Das Transportnetz kann sowohl auf öffentlichen, als auch auf privaten Netzen eingerichtet sein, oder auch auf einer Mischung aus beiden. Räumlich unbegrenzt können entfernte dezentrale Einrichtungen der zentralen Einrichtung ZE2 zugeordnet werden, so daß auch sehr große Einrichtungen des ersten Typs durch eine derartige private Nebenstellenanlage bereitgestellt werden können, welche wiederum der Versorgung großer Flächenbereiche mit Kommunikationsverbindungen dienen.

Durch die Beibehaltung einer zentralen Einrichtung für die Steuerung besteht die Möglichkeit, bereits vorhandene Software mit minimalen Änderungen weiter zu verwenden. Würde man die Steuerung, wie ebenfalls das Koppelfeld verteilen, so müßten neue Verfahren zur Steuerung entwickelt werden und ein Mechanismus zur Konsistenzsicherung verteilter Datenbasen geschaffen werden. Ein weiterer Vorteil einer derartigen Einrichtung 250 gegenüber vernetzten Systemen zweiten Typs besteht darin, daß das verteilte System eine Einzelanlage ist, weswegen ebenfalls Leistungsmerkmale betreibbar sind, die lediglich anlagenweit implementiert sind. Damit entfällt die Umstellung einzelner Leistungsmerkmale, um sie für den Betrieb auf einem Netz zu befähigen.

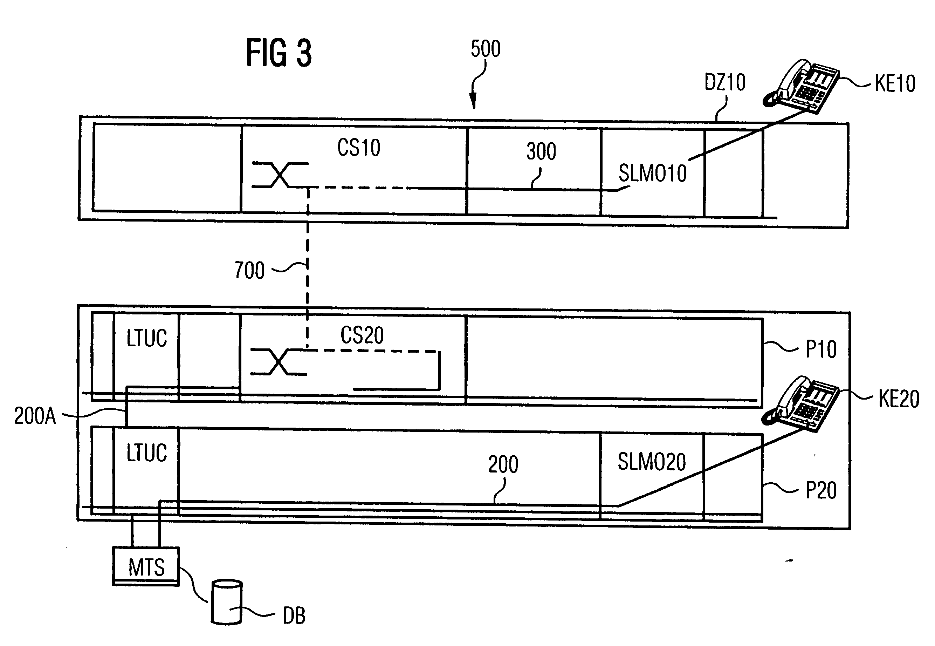

Figur 3 zeigt eine Kommunikationsanordnung, bei der zwei unterschiedliche Kommunikationseinrichtungen eines ersten und eines zweiten Typs in einer privaten Nebenstellenanlage 500 integriert sind.

Vom ersten Typ ist eine dezentrale Einrichtung DZ10 mit einer dezentralen Vermittlungseinrichtung CS10 und einem Kommunikationsengerät KE10 dargestellt, welche identisch sind mit den aus der Beschreibung von Figur 2 zwei bekannten Einrichtungen ihrer Art.

Vom zweiten Typ sind periphere Einrichtungen P10 und P20 dargestellt, wobei eine periphere Einrichtung mit einer dezentralen Vermittlungseinrichtung CS20 ausgestattet ist, um eine Verbindung mit der dezentralen Einrichtung DZ10 der Kommunikationseinrichtung ersten Typs herstellen und unterhalten zu können. Dort wird das transportnetzspezifische Call Processing durchgeführt, und bspw. in einer Umsetzvorrichtung die Wandlung von TDM-Daten in andere transportnetzspezifische Datentypen vorgenommen. Die Funktion der peripheren Einrichtung P20 ist gleich einer peripheren Einrichtung die bei der Erläuterung von Figur 1 beschrieben wurde. Im Unterschied dazu wird über die periphere Einrichtung P10 mit einer dezentralen Vermittlungseinrichtung CS20 und das Transportnetz 700, sowie die dezentrale Vermittlungseinrichtung CS10 eine Kommunikation zwischen dem an SLMO20 angeschlossenen digitalen oder analogen Kommunikationsendgerät K20 und dem an SLMO10 angeschlossenen digitalen oder analogen Kommunikationsendgerät K10 ermöglicht. Die dezentrale Vermittlungseinrichtung CS20 ist lediglich wegen der besseren Übersicht in einer zusätzlichen peripheren Einrichtung P10 dargestellt, sie könnte ebenso in P20 angeordnet sein. Ebenfalls ist das Steuerungsnetz nicht dargestellt, weil sein Aufbau einer sinngemäßen Überlagerung der Darstellungen aus Figur 1 und 2 entspricht.

Für das Koppelfeld MTS werden Steuersignale erzeugt, um Verbindungen im Bereich der Kommunikationseinrichtung zweiten Typs aufzubauen. In der Regel benutzen TDM-basierte private Nebenstellenanlagen zur physikalischen Verbindung einzelner Teilnehmer ein solches TDM-Koppelfeld MTS. Für dieses Koppelfeld wird dabei ein Einstellbefehl 1 abgesetzt, der bewirkt, daß ein erster expliziter Zeitschlitz von einer ersten expliziten PCM-Datenstrecke mit einem zweiten expliziten Zeitschlitz einer zweiten expliziten PCM-Datenstrecke verbunden wird. Damit sind zwei Teilverbindungen zu einer durchgehenden Strecke zwischen KE1 und KE2 über das Koppelfeld MTS verbunden.

Derartige Einstellbefehle werden in Kommunikationseinrichtungen des ersten Typs verwendet, um Verbindungen über das Transportnetz aufzubauen.

Zeitschlitz- und datenstreckenspezifische Zuordnungen von Endgeräten, dezentralen, sowie peripheren Einrichtungen werden zum Aufbau einer Verbindung einer Datenbank DB entnommen. Für das Koppelfeld erzeugte Einstellbefehle werden für ihre Verwendung in einer dezentralen Vermittlungseinrichtung CS10, CS20 umgeformt in eine oder mehrere Nachrichten an die dezentralen Vermittlungseinrichtungen und durch solche Zuordnungen ergänzt. Diese Steuerbefehle seien SB2 genannt. Eine Umsetzvorrichtung zur typspezifischen Formatkonvertierung der zu übertragenden Daten ist hier zum Beispiel in einer Dezentralen Vermittlungseinrichtung CS10, CS20 integriert. Sie wandelt hier beispielsweise PCM-Daten in ATM-Daten und umgekehrt.

Es ist bei solchen integrierten Anordnungen zu beachten, daß für die Kommunikation zwischen einer peripheren Einrichtung P10 oder P20 und dezentralen Einrichtungen DZ10 am Koppelfeld MTS ein separater Zeitschlitz bereitgestellt werden muß.

Er ist erforderlich, weil bei der integrierten Anordnung 3 Teilstrecken miteinander verbunden werden müssen, um eine Verbindung über die Gesamtstrecke von Kommunikationsendgerät KE10 zu Kommunikationsendgerät KE20 zu realisieren. Im einzelnen sind dies die folgenden Teilstrecken:
TS1, bestehend aus den Teilverbindungen 300 von KE10 zur dezentralen Vermittlungseinrichtung CS10 über das Transportnetz 700 zur dezentralen Vermittlungseinrichtung CS20 als Teilstrecke in der Kommunikationseinrichtung des ersten Typs; 200A von der dezentralen Vermittlungseinrichtung CS20 zum MTS als Teilstrecke in der Kommunikationseinrichtung des zweiten Typs, und 200 vom MTS zum Kommunikationsendgerät KE20, ebenfalls als Teilstrecke in der Kommunikationseinrichtung des zweiten Typs.

Die Steuerung einer integrierten Anordnung generiert weiterhin Einstellbefehle 1 wie in Anlagen des zweiten Typs, um den integrationsbedingten Entwicklungsaufwand gering zu halten. Ein zusätzlicher Softwaremodul adaptiert den Einstellbefehl 1 zur Erzeugung von Steuerungsbefehlen, die von den Anlagen des ersten und zweiten Typs verstanden werden. Zur Steuerung des Aufbaus der Verbindung auf den Teilstrecken werden die zeitschlitz- und datenstreckenbezogenen Bestandteile des Einstellbefehls 1 für die Teilstrecken 200 und 300, 700 benutzt. Für die Teilstrecke 200A muß ein zusätzlicher Zeitschlitz auf einer Datenstrecke belegt werden, was ebenfalls Aufgabe des Softwaremoduls ist.
Zum Verbinden der Teilstrecke 200A und der Teilstrecke 200, am MTS wird ein Einstellbefehl 2 benutzt, wie ihn eine Anlage vom zweiten Typ versteht. Damit ist eine Strecke vom Kommunikationsendgerät KE20 zur dezentralen Vermittlungseinrichtung CS20 geschaltet. Zum Verbinden von Vermittlungseinrichtung CS20 mit dem Kommunikationsendgerät KE10 auf der Teilstrecke TS1 werden Steuerbefehle SB2 benutzt, wie sie eine Anlage vom ersten Typ versteht.
Damit ist die Gesamtstrecke von KE20 zu KE10 geschaltet.

Bevorzugt können mehrere CS20 in peripheren Einrichtungen zum Einsatz kommen, um die Übertragungskapazität zu erhöhen. Dabei kann es beispielsweise eine feste Zuordnung von einer CS20 zu einer peripheren Einrichtung oder eine Zuordnung von Ziel zu dezentraler Einrichtung oder Datenstrecke, oder andere Zuordnungsvarianten geben;
Beispielsweise ist zur Kapazitätserhöhung auch ein Pooling von CS20's durchführbar, bei dem bei Bedarf, ohne jegliche Einschränkung in der Zuordnung eine freie Einheit gesucht wird. Vorteilhaft läßt sich dadurch die vorhandene Kapazität bestmöglich ausnutzen

## Patentansprüche

1. Verfahren zum Auf- und/oder Abbau einer Kommunikationsverbindung über Kommunikationseinrichtungen mindestens eines ersten und eines zweiten Typs mit folgenden Merkmalen:
a) zur Steuerung von Auf- und/oder Abbau einer Kommunikationsverbindung wird bei allen Typen (150, 250, 500) eine Signalisierung über ein Steuernetz durchgeführt;
b) die Verbindung wird beim ersten Typ (250) über mindestens eine dezentrale Vermittlungseinrichtung (CS1, CS10, CS2) auf-und/oder abgebaut;
c) die Signalisierung erfolgt von einer zentralen Einrichtung (ZE1,ZE2) aus.

2. Verfahren nach Anspruch 1, bei dem die Verbindung beim zweiten Typ (150) über ein Koppelfeld (MTS) auf-und/oder abgebaut wird.

3. Verfahren nach einem der vorangehenden Ansprüche, bei dem die Verbindung beim ersten Typ (250) über ein Transportnetz (700) aufgebaut wird.

4. Verfahren nach einem der vorangehenden Ansprüche, bei dem die zentrale Einrichtung (ZE1,ZE2) eine dezentrale Vermittlungseinrichtung (CS1, CS10, CS2, CS20) steuert.

5. Verfahren nach einem der vorangehenden Ansprüche, bei dem Kommunikationsdaten der Kommunikationsverbindung im Bereich einer dezentralen Vermittlungseinrichtung (CS20) für Kommunikationseinrichtungen unterschiedlichen Typs (150, 250) umgesetzt werden.

6. Verfahren nach einem der vorangehenden Ansprüche 3 bis 5, bei dem eine Kommunikationsverbindung (300) zu einem Kommunikationsendgerät (KE10) auf- und/oder abgebaut wird, das über definierte Zeitschlitze einer Zeitschlitzmultiplexverbindung (300) verbindbar ist, wobei die Verbindung über das Transportnetz (700) aufgebaut wird, indem in der zentralen Einrichtung (ZE1,ZE2) mindestens eine Zeitschlitzsteuerungsinformation erzeugt wird, welche für den Verbindugsaufbau im Transportnetz (700) verwendet wird und zur Übergabe von Kommunikationsdaten zwischen Kommunikationseinrichtungen unterschiedlichen Typs ein Zeitschlitz reserviert wird.

7. Verfahren nach Anspruch 6, bei dem die Zeitschlitzsteuerungsinformation mit einer transportnetzspezfischen Information verbunden und an eine dezentrale Vermittlungseinrichtung (CS1, CS10, CS2, CS20) übertragen wird.

8. Verfahren nach einem der vorangehenden Ansprüche, bei dem über die Kommunikationsverbindung (700) teilweise nach einem asynchronen Übertragungsverfahren übertragen wird.

9. Anordnung zum Auf- und/oder Abbau einer Kommunikationsverbindung über Kommunikationseinrichtungen mindestens eines ersten und eines zweiten Typs,
a) die ein Transportnetz (700) mit mindestens einer dezentralen Einrichtung zur Bereitstellung einer Kommunikationsverbindung (300, 400) zwischen Kommunikationseinrichtungen ersten Typs (250) aufweist,
b) die ein Steuerungsnetz (110, 210, 310, 410) zur Steuerung des Auf- und/oder Abbaus der Kommunikationsverbindung (700, 300, 400) aufweist,
c) die ein Koppelfeld (MTS) zur Bereitstellung einer Kommunikationsverbindung (100, 200, 200A) zwischen Kommunikationseinrichtungen zweiten Typs (150) aufweist,
d) und die eine zentrale Einrichtung (ZE1,ZE2) zur Steuerung des Verbindungsauf-und/oder abbaus im Transportnetz (700) durch das Steuerungsnetz (110, 210, 310, 410) aufweist, wobei diese zentrale Einrichtung mit dem Koppelfeld in Wirkverbindung steht und ihr als Bestandteil einer Steuerungsiformation eine Verbindungssteuerungsinformation des Koppelfeldes (MTS) zugeführt wird.

10. Anordnung nach Anspruch 9, bei der das Transportnetz (700) eine andere Topologie als das Steuerungsnetz (110, 210, 310, 410) aufweist.

11. Anordnung nach einem der Ansprüche 9 bis 10, bei der die mindestens eine dezentrale Einrichtung (SLMO1 SLMO10, SLMO2, DZ1, DZ10, DZ2) Mittel zum Anschluß eines Kommunikationsendgerätes (KE1, KE10, KE2) aufweist, und das Transportnetz (700) im Bereich der dezentralen Einrichtung eine Vermittlungseinrichtung (CS1, CS10, CS2) zur Bereitstellung einer Kommunikationsverbindung im Transportnetz aufweist.

12. Anordnung nach einem der Ansprüche 9 bis 11, bei der die Kommunikationseinrichtung zweiten Typs (150) mindestens eine periphere Einrichtung (P1, P10, P2, P20) mit mindestens einer Einrichtung (SLMO1 SLMO2, SLMO20) zum Anschluß eines Kommunikationsendgerätes (KE1, KE2, KE20) aufweist, und im Bereich der Einrichtung eine Vermittlungseinrichtung (CS20) zur Bereitstellung einer Kommunikationsverbindung (200A, 700) im Transportnetz aufweist.

13. Anordnung nach einem der Ansprüche 9 bis 11,
die für die Umsetzung von Kommunikationsdaten eine Konvertierungsvorrichtung aufweist, welche Kommunikationsdaten in mindestens einer Datenflußrichtung umsetzt, wozu ihr in Abhängigkeit des Typs einer Kommunikationseinrichtung mindestens Datentypen zugeführt werden, die für eine Kommunikationseinrichtung ersten Typs (250) und für eine Kommunikationseinrichtung zweiten Typs (150) bestimmt sind.

14. Anordnung nach Anspruch 13, bei der die Konvertierungsvorrichtung im Datenfluß in unmittelbarer Nachbarschaft von einer dezentralen Vermittlungseinrichtung (CS10, CS20) angeordnet ist.

15. Anordnung nach einem der Ansprüche 9 bis 14, die zentrale Mittel zur Bereitstellung mindestens eines verbindungsbezogenen Leistungsmerkmals aufweist, wobei diese Mittel mit der zentralen Einrichtung (ZE1,ZE2) in Wirkverbindung stehen.

16. Anordnung nach einem der Ansprüche 9 bis 15, die als Nebenstellenanlage ausgebildet ist und bei der die mindestens eine dezentrale Einrichtung (DZ1, DZ2) Mittel zum Anschluß von Kommunikationsendgeräten (KE1, KE2) aufweist.

17. Anordnung nach einem der Ansprüche 9 bis 16, die im Bereich der dezentralen Einrichtung (DZ1, DZ2) eine Steuerungseinrichtung (CS1, CS2) aufweist, zur Bereitstellung einer Kommunikationsverbindung im Bereich dieser dezentralen Einrichtung, falls die zentrale Steuerungseinrichtung (ZE2) nicht verfügbar ist.

## Claims

1. Method for setting up and/or clearing a communications link via communication devices of at least a first and a second type, having the following features:
a) in order to control the setting up and/or clearing of a communications link, signaling is carried out via a control network for all types (150, 250, 500);
b) for the first type (250) the connection is set up and/or cleared via at least one decentralized switching device (CS1, CS10, CS2); and
c) the signaling takes place from a central device (ZE1, ZE2).

2. Method according to Claim 1, in which, for the second type (150), the connection is set up and/or cleared via a switching matrix (MTS).

3. Method according to one of the preceding claims, in which, for the first type (250), the connection is set up via a transport network (700).

4. Method according to one of the preceding claims, in which the central device (ZE1, ZE2) controls a decentralized switching device (CS1, CS10, CS2, CS20).

5. Method according to one of the preceding claims, in which communications data for the communications link is converted in the region of a decentralized switching device (CS20) for communication devices of different types (150, 250).

6. Method according to one of the preceding Claims 3 to 5, in which a communications link (300) is set up to and/or cleared from a communications terminal (KE10) which can be connected via defined time slots in a time slot multiplexing connection (300), with the connection being set up via the transport network (700) by producing, in the central device (ZE1, ZE2), at least one time slot control information item, which is used for setting up connections in the transport network (700), and one time slot is reserved for transferring communication data between communication devices of different types.

7. Method according to Claim 6, in which the time slot control information is linked to a transport-network-specific information item and is transmitted to a decentralized switching device (CS1, CS10, CS2, CS20).

8. Method according to one of the preceding claims, in which an asynchronous transmission method is used, partially, for transmission via the communications link (700).

9. Arrangement for setting up and/or clearing a communications link via communication devices of at least a first and a second type,
a) which has a transport network (700), with at least one decentralized device, for providing a communications link (300, 400) between communication devices of a first type (250),
b) which has a control network (110, 210, 310, 410) for controlling the setting up and/or clearing of the communications link (700, 300, 400),
c) which has a switching matrix (MTS) for providing a communications link (100, 200, 200A) between communication devices of the second type (150),
d) and which has a central device (ZE1, ZE2) for controlling the setting up and/or clearing of connections in the transport network (700) through the control network (110, 210, 310, 410) with this central device being operatively connected to the switching matrix, and connection control information for the switching matrix (MTS) being supplied to it as part of a control information item.

10. Arrangement according to Claim 9, in which the transport network (700) has a different topology to the control network (110, 210, 310, 410).

11. Arrangement according to one of Claims 9 to 10, in which the one decentralized device (SLMO1, SLMO10, SLM02, DZ1, DZ10, DZ2) has means for connection of a communications terminal (KE1, KE10, KE2), and the transport network (700) has a switching device (CS1, CS10, CS2) in the region of the decentralized device, in order to provide a communications link in the transport network.

12. Arrangement according to one of Claims 9 to 11, in which the communications device of the second type (150) has at least one peripheral device (P1, P10, P2, P20) with at least one device (SLMO1, SLM02, SLM020) for connection of a communications terminal (KE1, KE2, KE20) and, in the region of the device, has a switching device (CS20) for providing a communications link (200A, 700) in the transport network.

13. Arrangement according to one of Claims 9 to 11, which has a conversion apparatus for conversion of communication data, which conversion apparatus converts communication data in at least one data flow direction, for which purpose it is supplied, as a function of the type of communication device, with at least data types which are intended for a communication device of the first type (250) and for a communication device of the second type (150).

14. Arrangement according to Claim 13, in which the conversion apparatus is arranged in the data flow in the immediate vicinity of a decentralized switching device (CS10, CS20).

15. Arrangement according to one of Claims 9 to 14, which has central means for providing at least one connection-related service feature, with these means being operatively connected to the central device (ZE1, ZE2).

16. Arrangement according to one of Claims 9 to 15, which is in the form of a private branch exchange and the at least one decentralized device (DZ1, DZ2) has means for connection of communications terminals (KE1, KE2).

17. Arrangement according to one of Claims 9 to 16, which, in the region of the decentralized device (DZ1, DZ2), has a control device (CS1, CS2) for providing a communications link in the region of this decentralized device, if the central control device (ZE2) is not available.

## Revendications

1. Procédé pour établir et/ou interrompre une liaison de communication au moyen de dispositifs de communication d'au moins un premier et d'un second types présentant les caractéristiques suivantes :
a) pour la commande de l'établissement et/ou de l'interruption d'une liaison de communication, une signalisation est effectuée auprès de tous les types (150, 250, 500) au moyen d'un réseau de commande ;
b) la liaison est établie et/ou interrompue pour le premier type (250) au moyen d'au moins un dispositif de transmission (CS1, CS10, CS2) décentralisé ;
c) la signalisation s'effectue à partir d'un dispositif (ZE1, ZE2) central.

2. Procédé selon la revendication 1, dans lequel la liaison pour le second type (150) est établie et/ou interrompue au moyen d'un champ de couplage (MTS).

3. Procédé selon l'une quelconque des revendications précédentes, dans lequel la liaison pour le premier type (250) est établie au moyen d'un réseau de transport (700).

4. Procédé selon l'une quelconque des revendications précédentes, dans lequel le dispositif (ZE1, ZE2) central commande un dispositif de commutation (CS1, CS10, CS2, CS20) décentralisé.

5. Procédé selon l'une quelconque des revendications précédentes, dans lequel des données de communication de la liaison de communication sont converties dans la zone d'un dispositif de commutation (CS20) décentralisé pour des dispositifs de communication de type différent (150, 250).

6. Procédé selon l'une quelconque des revendications précédentes 3 à 5, dans lequel une liaison de communication (300) est établie et/ou interrompue avec un terminal de communication (KE10), qui peut être relié par des créneaux temporels définis d'une liaison multiplex à créneau temporel (300), la liaison étant établie au moyen du réseau de transport (700) en générant dans le dispositif (ZE1, ZE2) central au moins une information de commande de créneau temporel qui est utilisée pour l'établissement de la liaison dans le réseau de transport (700) et en réservant un créneau temporel pour la transmission de données de communication entre des dispositifs de communication de type différent.

7. Procédé selon la revendication 6, dans lequel l'information de commande de créneau temporel est reliée à une information spécifique au réseau de transport et est transmise à un dispositif de transmission (CS1, CS10, CS2, CS20) décentralisé.

8. Procédé selon l'une quelconque des revendications précédentes, dans lequel on transmet au moyen de la liaison de la communication (700) en partie selon un procédé de transmission asynchrone.

9. Agencement pour l'établissement et/ou l'interruption d'une liaison de communication au moyen de dispositifs de communication d'au moins un premier et d'un second types,
a) qui présente un réseau de transport (700) avec au moins un dispositif décentralisé pour la mise à disposition d'une liaison de communication (300, 400) entre des dispositifs de communication du premier type (250),
b) qui présente un réseau de commande (110, 210, 310, 410) pour la commande de l'établissement et/ou de l'interruption de la liaison de communication (700, 300, 400),
c) qui présente un champ de couplage (MTS) pour la mise à disposition d'une liaison de communication (100, 200, 200A) entre des dispositifs de communication du second type (150),
d) et qui présente un dispositif (ZE1, ZE2) central pour la commande de l'établissement et/ou de l'interruption de la liaison dans le réseau de transport (700) par le réseau de commande (110, 210, 310, 410), ce dispositif central étant en liaison active avec le champ de couplage et une information de commande de liaison du champ de couplage (MTS) lui étant amenée en tant qu'élément constitutif d'une information de commande.

10. Agencement selon la revendication 9, dans lequel le réseau de transport (700) présente une autre topologie que le réseau de commande (110, 210, 310, 410).

11. Agencement selon l'une quelconque des revendications 9 à 10, dans lequel le au moins un dispositif (SLMO1, SLMO10, SLM02, DZ1, DZ10, DZ2) décentralisé présente des moyens pour le raccordement d'un terminal de communication (KE1, KE10, KE2) et le réseau de transport (700) présente dans la zone du dispositif décentralisé un dispositif de commutation (CS1, CS10, CS2) pour la mise à disposition d'une liaison de communication dans le réseau de transport.

12. Agencement selon l'une quelconque des revendications 9 à 11, dans lequel le dispositif de communication du second type (150) présente au moins un dispositif (P1, P10, P2, P20) périphérique avec au moins un dispositif (SLMO1, SLM02, SLM020) pour le raccordement d'un terminal de communication (KE1, KE2, KE20), et présente dans la zone du dispositif un dispositif de commutation (CS20) pour la mise à disposition d'une liaison de communication (200A, 700) dans le réseau de transport.

13. Agencement selon l'une quelconque des revendications 9 à 11,
qui présente pour la conversion de données de communication un dispositif de conversion qui convertit des données de communication dans au moins un sens de flux de données, ce pourquoi au moins des types de données, qui sont destinés à un dispositif de communication du premier type (250) et à un dispositif de communication du second type (150), lui sont amenés en fonction du type de dispositif de communication.

14. Agencement selon la revendication 13, dans lequel le dispositif de conversion est disposé dans le flux de données à proximité immédiate d'un dispositif de commutation (CS10, CS20) décentralisé.

15. Agencement selon l'une quelconque des revendications 9 à 14, qui présente des moyens centraux pour la mise à disposition d'au moins une facilité proposée spécifique à la liaison, ces moyens étant en liaison active avec le dispositif (ZE1, ZE2) central.

16. Agencement selon l'une quelconque des revendications 9 à 15, qui est conçu comme poste secondaire et dans lequel le au moins un dispositif (DZ1, DZ2) décentralisé présente des moyens pour le raccordement de terminaux de communication (KE1, KE2).

17. Agencement selon l'une quelconque des revendications 9 à 16, qui présente dans la zone du dispositif (DZ1, DZ2) décentralisé un dispositif de commande (CS1, CS2) pour la mise à disposition d'une liaison de communication dans la zone de ce dispositif décentralisé dans le cas où le dispositif de commande (ZE2) central n'est pas disponible.
